# EUROPEAN PATENT APPLICATION

(11) **EP 4 647 182 A2**
(43) Date of publication of application: **12.11.2025**
(21) Application number: 25192092.2
(22) Date of filing: 23.11.2022
(51) Int. Cl.: B07C 5/34

(54) **SORTING ANIMALS BASED ON NON-INVASIVE DETERMINATION OF ANIMAL CHARACTERISTICS**

(30) Priority: 23.11.2021 US 202163282425 P
(62) Divisional of application: 22209058.1
(71) Applicant: AQUATICODE LTD., XBX 1120 Ta Xbiex (MT)
(72) Inventor: BRENNER, Ayal, XBX 1120 Ta Xbiex (MT); SHNIBERG, Mordekhay, XBX 1120 Ta Xbiex (MT); PODES, Christoph, XBX 1120 Ta Xbiex (MT); DA SILVA, Ana Catarina Marcelino Costa, XBX 1120 Ta Xbiex (MT)
(74) Representative: Boult Wade Tennant LLP

(57) **Abstract**

Methods and systems are disclosed for improvements in aquaculture that allow for increasing the number and growth efficiency of fish in an aquaculture setting (or other animals in other settings) by identifying or predicting characteristics of the animals based on visual or ultrasound images of the animals obtained through non-invasive means. The animals are sorted based on the characteristics.

## Description

### FIELD OF THE INVENTION

The invention relates to sorting animals based on non-invasive determination of animal characteristics.

### BACKGROUND

Aquaculture, the farming of fish, crustaceans, mollusks, aquatic plants, algae, and other organisms, is the fastest growing food sector, and it provides most fish for human consumption. However, there is a rising demand for seafood due to human population growth, increasing disposable income in the developing world (which coincides with an increase of a meat-based diet), increasing coastal populations, and general health awareness (which tends to motivate consumers to fish-based protein). Wild fish resources are already at their limits, and the world market is increasingly focusing on being more sustainable and environmentally responsible, meaning increased harvesting of wild fish is not feasible.

### SUMMARY

Given the infeasibility of meeting the world demand through harvesting wild fish, aquaculture represents a natural solution. However, increasing the use of aquaculture raises additional concerns such as increased disease, growth and feeding inefficiencies, and waste management. For example, increasing the number of fish in a fish farm, without mitigating measures, increases the prevalence of diseases as the proximity of fish to each other increases. The growth and feed inefficiencies are increased as more fish in proximity to each other make health and feed management more difficult, and more fish lead to more fish waste which increases the environmental impact of a fish farm on its immediate area.

Methods and systems are disclosed herein for improvements in aquaculture that allow for increasing the number and growth efficiency of fish in an aquaculture setting while still mitigating the problems above. Specifically, using a unique sorting system, fish with superior traits are identified and sorted. In conventional systems, fish may be sorted or graded based on size, or other visually evident information, for example.

In contrast to the conventional approaches, methods and systems are described herein for non-invasive procedures for identifying characteristics in fish, and sorting the fish based on the characteristics. The present systems and methods may be configured to identify and sort based on internal conditions in juvenile or other fish such as gender, growth potential, diseases resistance, etc. It should be noted that while the discussion herein focuses on fish, the described systems and methods can be similarly applied with other animals such as poultry animals, crustaceans, swine, or other animals.

For example, according to an embodiment, there is provided a system for sorting animals. The system comprises an ultrasound transducer configured to obtain an ultrasound image of an animal located on a path. The ultrasound transducer is configured to obtain the ultrasound image while the animal moves along a portion of the path. The system comprises a sorter configured to sort the animal into a group; and control circuitry configured to: determine, based on the ultrasound image, a characteristic of the animal; and control the sorter to sort the animal into the group based on the characteristic.

In some embodiments, the system further comprises a conveyor comprising a plurality of compartments configured to receive animals and move the animals along the path; and a camera configured to obtain a visual image of the animal in a compartment on the conveyor as the animal moves past the camera. In some embodiments, the ultrasound transducer is configured to obtain the ultrasound image of the animal in the compartment on the conveyor. The ultrasound transducer may be configured to obtain the ultrasound image while the ultrasound transducer moves along a portion of the path with the animal. The control circuitry may be configured to: determine, based on the visual image, a starting point on the animal for the ultrasound transducer, and control the ultrasound transducer to move along the portion of the path based on the starting point to obtain the ultrasound image.

In some embodiments, the control circuitry is configured to determine the characteristic of the animal based on the ultrasound image by inputting the ultrasound image to an artificial neural network, which is trained to output the characteristic based on the ultrasound image.

In some embodiments, the artificial neural network is trained to identify one or more phenotype characteristics of the animal based on the ultrasound image, and determine presence of a biomarker in the animal indicative of the characteristic output by the artificial neural network based on the one or more phenotype characteristics.

In some embodiments, the characteristic is gender of the animal, presence of disease in the animal, size of the animal, early maturation of the animal, mature parr, presence of bacterial kidney disease in the animal, heart and/or skeletal muscle inflammation in the animal, or a fat percentage of the animal.

In some embodiments, the control circuitry is configured to determine a starting point on the animal for the ultrasound image by providing a visual image of the animal to a machine vision algorithm, which is trained to determine the starting point based on the visual image.

In some embodiments, the ultrasound transducer is configured to move in at least two dimensions. The at least two dimensions comprise a first dimension along the path; and a second dimension along a body of the animal. The second dimension may be substantially perpendicular to the first dimension and the path. The ultrasound transducer may be configured to move in the first dimension and the second dimension substantially simultaneously while obtaining the ultrasonic image, starting from a starting point. In some embodiments, a width of the ultrasonic transducer and the movement in the second dimension defines an image area on the body of the animal, which includes target anatomy of the animal.

In some embodiments, the system further comprises a plurality ultrasound transducers, each controlled by the control circuitry to obtain ultrasound images of a plurality of animals in a plurality of compartments on a conveyor at the same time.

In some embodiments, the sorter comprises a mechanical arm controlled by the control circuitry to move between multiple positions such that sorting the animal into a group comprises moving the mechanical arm to direct the animal from the conveyor to a same physical location as other animals in the group.

In some embodiments, the animal is a fish and a starting point for the ultrasound image corresponds to a start of an operculum of the fish.

In some embodiments, the system further comprises the camera, where the camera is configured to obtain a red green blue (RGB) image set that includes a visual image. The ultrasound transducer is configured to obtain an ultrasound image set of the animal that includes the ultrasound image; and the control circuitry is configured to: determine a starting point for the ultrasound transducer based on the RGB image set, and determine the characteristic based on the ultrasound image set.

In some embodiments, the animal is a fish and the visual image is a red green blue (RGB) image. In some embodiments, the control circuitry is further configured for determining characteristics based on RGB images and/or other information. For example, in some embodiments, the control circuitry is further configured to determine, based on the RGB image, a short operculum in the fish and/or damage to gills of the fish, diseases resistance, growth performance, current diseases of the fish, a smoltification status, and/or other characteristics (e.g., see other examples of characteristics described herein).

According to another embodiment, there is provided a method for sorting animals comprising one or more of the operations described above, performed by one or more components of the sorting system.

According to another embodiment, there is provided a tangible, non-transitory, machine-readable medium storing instructions that, when executed by a data processing apparatus of the control circuitry, cause the control circuitry to perform one or more of the operations described above.

The efficiencies and performance of animals such as fish are thus increased without the drawbacks discussed above.

Various other aspects, features, and advantages of the invention will be apparent through the detailed description of the invention and the drawings attached hereto. It is also to be understood that both the foregoing general description and the following detailed description are examples and not restrictive of the scope of the invention. As used in the specification and in the claims, the singular forms of "a," "an," and "the" include plural referents unless the context clearly dictates otherwise. In addition, as used in the specification and the claims, the term "or" means "and/or" unless the context clearly dictates otherwise.

### BRIEF DESCRIPTION OF THE DRAWINGS

FIG. 1 illustrates a perspective view of a sorting system, in accordance with one or more embodiments.
FIG. 2 illustrates a schematic view of the system, in accordance with one or more embodiments. FIG. 2 illustrates additional components of system including control circuitry, for example.
FIG. 3 illustrates a computing system that is part of control circuitry of the sorting system, featuring a machine learning model configured to determine characteristics of animals, in accordance with one or more embodiments.
FIG. 4 shows graphical representations of artificial neural network models for characteristic determination based on (visual or) ultrasound images, in accordance with one or more embodiments.
FIG. 5 illustrates a method for sorting animals with the sorting system, in accordance with one or more embodiments.
FIG. 6 illustrates a view of the sorting system from a different angle than the view shown in FIG. 1, in accordance with one or more embodiments.
FIG. 7 illustrates different views of the sorting system with a hypothetical operator shown at the sorting system in each view, in accordance with one or more embodiments.
FIG. 8 illustrates another possible embodiment of the sorting system, in accordance with one or more embodiments.
FIG. 9 illustrates a schematic view of the system shown in FIG. 8, in accordance with one or more embodiments.
FIG. 10 illustrates several views of a three (in this example) conveyor embodiment of the present system, in accordance with one or more embodiments.

### DETAILED DESCRIPTION OF THE DRAWINGS

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

In contrast to conventional approaches to identifying animal characteristics that use invasive approaches, methods and systems are described herein for non-invasive procedures that identify animal characteristics non-invasively and efficiently, and sort the animals based on the characteristics, for farming or other applications. A sufficiently high throughput (animals per hour) in a system with a limited size (to be able to transport and potentially share between farms, plus producers have limited space) is provided. Advantageously, even with the high throughput, the system produces ultrasound images which are readable by a machine learning model (such as a neural network) so that the machine learning model can produce predictions with a very high accuracy on features like gender determination, for example, in real time or near real time.

Sufficiently high throughput is achieved by, among other things, configuring the system such that the animals are positioned side by side (instead of nose to tail) on a conveyor, which reduces the time between animals. Ultrasound can be limited in its image acquisition speed. Therefore the relative speed of a scan (how fast an ultrasound transducer scans an animal) is limited. In order to overcome these or other limitations related to scanning speed, the ultrasound transducer(s) of the present system is (are) configured to travel with an animal along the conveyor or path during a scan. This provides a faster processing time of animals by the system relative to prior approaches. In addition, a high frequency ultrasound transducer is used, but the speed of a given scan is limited to produce blur free images.

In some embodiments, ultrasound with increased acquisition speed is used so that ultrasound transducers of the present systems and methods need not travel with the animal along a conveyor or path during a scan.

The system also uses machine vision to determine the starting point of the ultrasound scan based on red green blue (RGB) images of an animal. Based on the width of an ultrasound transducer (e.g., that corresponds to a width on the animal), a certain window (on the animal) is scanned (e.g., over a certain length of the body of the animal), which may be used to predict an organ (gonad), or other characteristics of the animal.

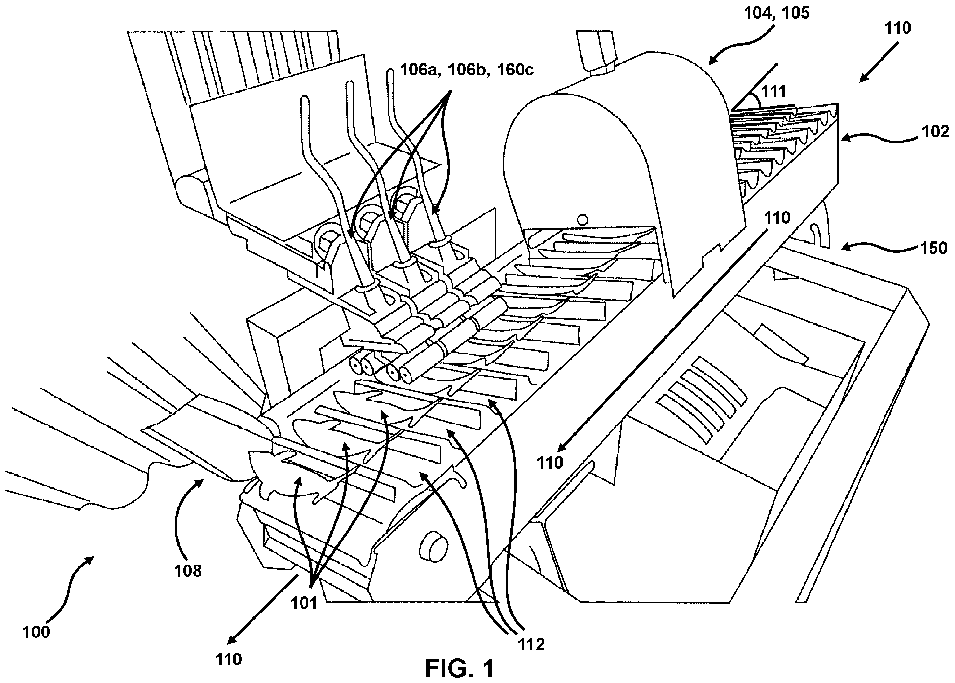

FIG. 1 illustrates a perspective view of a sorting system 100, in accordance with one or more embodiments. Sorting system 100 is configured for sorting fish 101 in this example, but may be configured similarly for sorting other animals. Examples of other animals include poultry animals (e.g., chickens, turkeys, etc.), crustaceans, swine, or other animals. As show in FIG. 1, system 100 includes a conveyor 102, a camera 104 (shown inside a camera housing 105 in FIG. 1), ultrasound transducers 106a, 106b, and 106c, a sorter 108, and/or other components.

Conveyor 102 is configured to receive animals (e.g., such as fish 101) and move the animals along a path 110. The animals may be placed one by one on conveyor 102, aligned laterally (relative to an axis of conveyor 102) in compartments 112 so that the animals travel with one of their sides facing toward camera 104 or an ultrasound transducer 106a, 106b, or 106c. The animals move on conveyor 102 to camera 104 and ultrasound transducers 106a, 106b, or 106c, where they are imaged (visually and ultrasonically respectively). Once the visual and ultrasound images are processed, the animals are sorted into (e.g., three or more) groups by sorter 108.

Path 110 is aligned along conveyor 102, starting at one end of conveyor 102 and extending to an opposite end of conveyor 102 and sorter 108. In some embodiments, path 110 begins at a feeder input zone, where an operator places one animal after another, oriented in a specific direction, into compartments 112 of conveyor 102. In some embodiments, conveyor 102 is configured with an axial tilt angle 111 so that the animals travel aligned to one side of conveyor 102 (e.g., caused by gravity). For example, in some embodiments, conveyor 102 comprises a plurality of compartments 112 configured to receive and hold the animals while they move along path 110. In some embodiments, compartments 112 are oriented at an angle relative to a surface of conveyor 102 to ensure a repeating position of an animal in each compartment 112. A given compartment 112 may have one or more sides that extend a certain distance from a surface of conveyor 102 at a certain angle. The distance or angle may be determined based on the type or dimensions of the animal, or other information. The distance or angle may be configured to be sufficient to separate one animal from the next on conveyor 102.

In some embodiments, conveyor 102 or the surfaces of compartments 112 may be formed by or coated with a material configured to reduce slippage or other movement of an animal in a compartment 112 on conveyor 102. For example, the material may include cloth, sponge, rubber or another polymer, or other materials. However, in some embodiments, one or more surfaces of conveyor 102 or compartments 112 may be metallic or be formed from other materials. In some embodiments conveyor 102 is supported by a frame 150 and/or other components.

By way of a non-limiting example, in some embodiments, the animals may be fish 101. Compartments 112 may be configured to hold a given fish perpendicular to path 110 of conveyor 102 (shown in FIG. 1). Camera 104 is configured to obtain visual images of animals in compartments 112 on conveyor 102 as the animals move past camera 104. In some embodiments, camera 104 is configured to obtain a red green blue (RGB) image set that includes the visual images. For example, in some embodiments, the visual images may include an image set of an animal. The image set may include one or more images of the animal. If the image set includes multiple images, the multiple images may be captured from different angles (e.g., a top view, side view, bottom view, etc.) and/or may be captured substantially simultaneously. The views may also include plan, elevation, and/or section views. The one or more views may create a standardized series of orthographic two-dimensional images that represent the form of the three-dimensional animal. For example, six views of the animal may be used, with each projection plane parallel to one of the coordinate axes of the animal. The views may be positioned relative to each other according to either a first-angle projection scheme or a third-angle projection scheme. The images in the image set may include separate images (e.g., images stored separately, but linked by a common identifier such as a serial number) or images stored together. An image in an image set may also be a composite image (e.g., an image created by cutting, cropping, rearranging, and/or overlapping two or more images).

In some embodiments, the image set may be created using an imaging device such as camera 104 that detects electromagnetic radiation with wavelengths between about 400 nanometers to about 1100 nanometers. In some embodiments, the image set may be created using an imaging device such as camera 104 that detects electromagnetic radiation with wavelengths between 400 to 500 nanometers, between 500 to 600 nanometers, between 700 to 900 nanometers, or between 700 to 1100 nanometers.

Camera housing 105 is configured to define an imaging area for camera 104. The imaging area may be an area where an amount of artificial or ambient light is controlled when images are taken by camera 104, for example. Camera housing 105 may be formed by one or more walls at a location just above conveyor 102. In some embodiments, camera 104 and camera housing 105 remain stationary relative to conveyor 102 and compartments 112 as animals move beneath camera 104 along path 110.

Ultrasound transducers 106a, 106b, and 106c are configured to obtain ultrasound images of the animals in compartments 112 on conveyor 102. In some embodiments, ultrasound transducers 106a, 106b, and 106c are configured to obtain an ultrasound image set of the animal that includes the ultrasound images. In some embodiments, an individual ultrasound transducer 106a, 106b, or 106c is configured to obtain one or more ultrasound images of a given animal on conveyor 102. For example, the ultrasound images may include an ultrasound image set of an animal. The ultrasound image set may include one or more ultrasound images of the animal. If the ultrasound image set includes multiple ultrasound images, the multiple ultrasound images may be captured from different angles (e.g., a top view, side view, bottom view, etc.) and/or may be captured substantially simultaneously. The views may also include plan, elevation, and/or section views. The one or more views may create a standardized series of orthographic two-dimensional images that represent the form of the three-dimensional animal. For example, six views of the animal may be used, with each projection plane parallel to one of the coordinate axes of the animal. The views may be positioned relative to each other according to either a first-angle projection scheme or a third-angle projection scheme. The ultrasound images in the ultrasound image set may include separate images (e.g., images stored separately, but linked by a common identifier such as a serial number) or images stored together. An ultrasound image in an ultrasound image set may also be a composite image (e.g., an image created by cutting, cropping, rearranging, and/or overlapping two or more ultrasound images.

Ultrasound transducers 106a, 106b, and 106c are configured to obtain the ultrasound images while the ultrasound transducers 106a, 106b, and 106c move along a portion of path 110 with the animals. Ultrasound transducers 106a, 106b, and 106c are configured to move in at least two dimensions. The at least two dimensions comprise a first dimension along path 110 and a second dimension along a body of a given animal. The second dimension is substantially perpendicular to the first dimension and path 110, for example. In some embodiments, an ultrasound transducer 106a, 106b, or 106c is configured to move in the first dimension and the second dimension substantially simultaneously while obtaining ultrasonic images, starting from the starting point.

Movement in two dimensions occurs at a controlled speed over defined distances that correspond to movement of an animal on conveyor 102, and a length of a given animal. The controlled speed and distances facilitate acquisition of standardized images for each animal carried by conveyor 102. A mechanical system comprising independent electrical linear actuators may be configured to move each ultrasound transducer 106a, 106b, and 106c along path 110, or perpendicular to path 110, along the body of a given fish 101, or in other directions, for example. Such actuators may also be used to move a given transducer toward or away from the body of a fish 101 (e.g. to place pressure on the body of a fish 101 during a scan as described herein).

In some embodiments, a width of an ultrasonic transducer 106a, 106b, and 106c, and the movement in the second dimension defines an image area on the body of the animal. The image area includes target anatomy of the animal. In some embodiments, a width of an ultrasound transducer 106a, 106b, or 106c is at least 10mm. In some embodiments, a width of an ultrasound transducer 106a, 106b, or 106c is at least 20mm. In some embodiments, a width of an ultrasound transducer 106a, 106b, or 106c is at least 30mm. In some embodiments, an ultrasound transducer 106a, 106b, or 106c is configured to move along the body of an animal over a distance of about 15mm. In some embodiments, an ultrasound transducer 106a, 106b, or 106c is configured to move along the body of an animal over a distance of about 32mm. In some embodiments, an ultrasound transducer 106a, 106b, or 106c is configured to move along the body of an animal over a distance of about 45mm. It should be understood that the width of an ultrasound transducer and the distance that the ultrasound transducer moves along the length of the body of an animal may be adjusted based on the size or type of animal being scanned, for example.

In some embodiments, an ultrasound transducer 106a, 106b, or 106c is configured to contact an animal in a compartment 112 and keep pressure on the animal while ultrasound images are acquired. This may be accomplished through, for example, rolls located before and after a transducer. The rolls and transducer can be loaded with a spring or other systems to maintain steady pressure without damaging a fish.

By way of a non-limiting example, ultrasound transducers 106a, 106b, and 106c are configured to scan three fish 101 moving along conveyor 102 at the same time. The group of transducers is moving back and forth, to measure one group of fish 101 and then move for a next group of fish 101. When the ultrasound scans are being performed, the transducers move at the same speed as the fish along path 110 of conveyor 102. Movements of the group of transducers and conveyor 102 are synchronized. Independent electrical linear transducers are configured to move each ultrasound transducer 106a, 106b, and 106c along and perpendicular to path 110 along the body of a given fish 101 during ultrasound imaging. Such actuators may also be used to move a given transducer toward or away from the body of a fish 101 (e.g. to place pressure on the body of a fish 101 during a scan).

Sorter 108 is configured to sort the animals into groups. Sorter 108 is configured to sort the animals into groups as the animals come off of conveyor 102. In some embodiments, sorter 108 comprises a mechanical arm controlled by control circuitry to move between multiple positions such that sorting the animal into a group comprises moving the mechanical arm to direct the animal from conveyor 102 to a same physical location as other animals in the group.

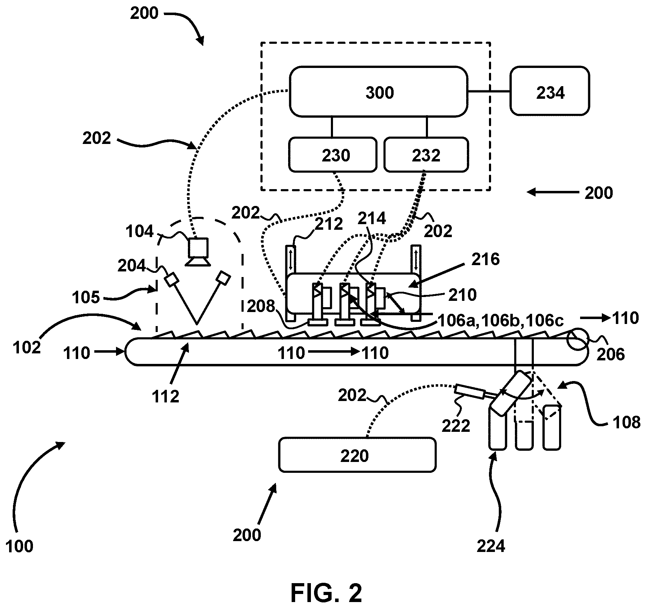

FIG. 2 illustrates a schematic view of system 100, in accordance with one or more embodiments. FIG. 2 illustrates additional components of system 100 including control circuitry 200. For example, FIG. 2 illustrates various wired or wireless electronic communication paths 202 formed between different components of system 100. FIG. 2 illustrates lighting 204 that may be coupled to camera 104 or included in camera housing 105, for example. FIG. 2 illustrates a gear motor 206 configured to drive conveyor 102. FIG. 2 illustrates compression rollers 208 coupled to ultrasound transducers 106a, 106b, and 106c configured to place animals that are being ultrasonically imaged under pressure (e.g., to prevent unintentional movement during imaging), actuators 210 and 212 configured to move the ultrasound transducers (as described above), a compensation mechanism 214, and a wagon 216 mechanically coupled to conveyor 102. Compensation mechanism 214 is configured to adjust the pressure a transducer puts on a fish. Wagon 216 is configured to travel with the conveyor while a scan is performed with an ultrasound transducer.

Control circuitry 200 is configured to determine, based on the visual images from camera 104, starting points on the animals for the ultrasound transducers. In some embodiments, control circuitry 200 is configured to control the ultrasound transducers to move along the portion of path 110 based on the starting point to obtain the ultrasound images. However, in some embodiments, the ultrasound transducers are controlled to move along the portion of path 110 by mechanical means. Control circuitry 200 is configured to determine the starting point on a given animal by providing the visual image(s) for that animal to a machine vision algorithm, which is trained to determine the starting point based on the visual image(s).

In some embodiments, determining a starting point comprises generating a pixel array based on the visual images or image set of the animal. The pixel array may refer to computer data that describes an image (e.g., pixel by pixel). In some embodiments, this may include one or more vectors, arrays, and/or matrices that represent either a Red, Green, Blue or grayscale image. Furthermore, in some embodiments, control circuity 200 may additionally convert the image set from a set of one or more vectors, arrays, and/or matrices to another set of one or more vectors, arrays, and/or matrices. For example, the control circuitry 200 may convert an image set having a red color array, a green color array, and a blue color to a grayscale color array. In some embodiments, for example, the animal is a fish and the starting point, determined based on the pixel array, corresponds to a start of an operculum of the fish.

Control circuitry 200 is configured to determine, based on the visual images, the ultrasound images, and/or other information, characteristics of the animals. In some embodiments, control circuitry 200 is configured to receive the visual images from camera 104 (FIG. 1) and the ultrasound images from ultrasound transducer 106a, 106b, or 106c (FIG. 1). In some embodiments, control circuitry 200 also includes memory (as described herein), which may be incorporated into and/or accessible by control circuitry 200. In some embodiments, control circuitry 200 may retrieve the (visual or ultrasound) image sets from memory.

In some embodiments, control circuitry 200 is configured to determine the starting point based on the RGB image set, and determine the characteristics based on the RGB image seta and/or the ultrasound image set. A characteristic may be or describe a condition, feature, or quality of an animal, that may be used to sort an animal into a group. The characteristics may include a current physiological condition (e.g., a condition occurring normal in the body of the animal) such as a gender of the animal (e.g., as determined by the development of sex organs) and/or a stage of development in the animal (e.g., the state of smoltification in a fish). The characteristics may include a predisposition to a future physiological condition such as a growth rate, maturity date, and/or behavioral traits. The characteristics may include a pathological condition (e.g., a condition centered on an abnormality in the body of the animal based on a response to a disease) such as whether or not the animal is suffering from a given disease and/or is currently infected with a given disease. The characteristics may include a genetic condition (e.g., a condition based on the formation of the genome of the animal) such as whether or not the animal includes a given genotype. The characteristics may include a presence of a given biomarker (e.g., a measurable substance in an organism whose presence is indicative of a disease, infection, current internal condition, future internal condition, and/or environmental exposure). The characteristics may include phenotype characteristics (e.g., one or more observable characteristics of an animal resulting from the interaction of its genotype with the environment). These externally visible traits may include traits corresponding to physiological changes in the animal. For example, during smoltification in a fish (i.e., the series of physiological changes where juvenile salmonid fish adapt from living in fresh water to living in seawater), externally visible traits related to this physiological change may include altered body shape, increased skin reflectance (silvery coloration), and increased enzyme production (e.g., sodium-potassium adenosine triphosphatase) in the gills.

By way of several specific examples, the characteristics (which again may be determined based on ultrasound images, RGB images, and/or other information) may include a gender of an animal, presence of disease in an animal, size of an animal, early maturation of an animal, mature parr, presence of bacterial kidney disease in an animal, heart or skeletal muscle inflammation in an animal, a fat percentage of an animal, a size of an animal, a shape of an animal, a weight of an animal, and/or other characteristics. In some embodiments, the animal is a fish and the visual image is a red green blue (RGB) image. In some embodiments, control circuitry 200 is configured to determine, based on the RGB image, characteristics such as a short operculum in the fish and/or damage to gills of the fish, diseases resistance, growth performance, current diseases, smoltification status, and/or other characteristics (e.g., see other examples of characteristics described herein).

Control circuitry 200 is configured to determine the characteristics of an animal based on one or more ultrasound images (and/or visual images) of that animal by inputting the one or more ultrasound images (and/or visual images) to a machine learning mode such as an artificial neural network, which is trained to output the characteristics based on the one or more ultrasound (or visual) images. The artificial neural network is trained to identify one or more phenotype characteristics of the animal based on the ultrasound image, and determine presence of a biomarker in the animal indicative of the characteristic output by the artificial neural network based on the one or more phenotype characteristics.

As shown in FIG. 2, control circuitry 200 may include various components configured to perform or control one or more of the operations described above, such as a programmable logic controller (PLC) input output (I/O) board 220 and an actuator 222 coupled to sorter 108. Sorter 108 may include a mechanical arm 224 configured to move back and forth between different positions to sort the animals, for example. Control circuitry 200 may include a PLC 230, an ultrasound transducer control board 232, a human machine interface (HMI) 234, and/or other components that are part of or configured to communicate with a computing system 300, or other components.

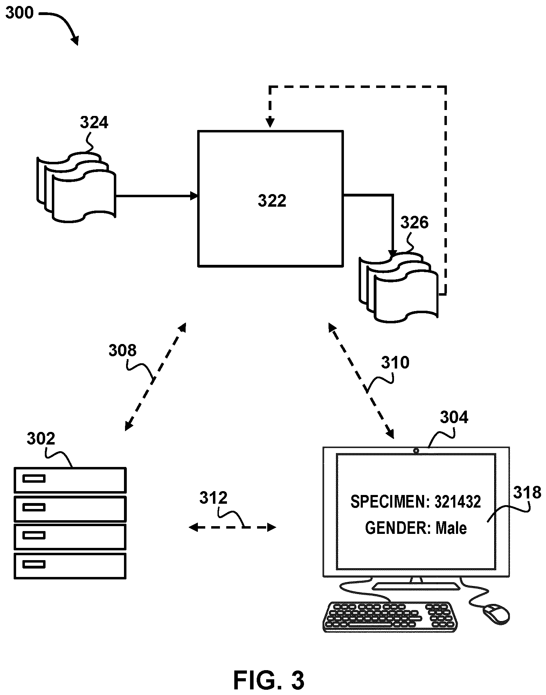

By way of a non-limiting example, FIG. 3 illustrates a computing system 300 that is part of control circuitry 200 (FIG. 2), featuring a machine learning model 322 configured to determine characteristics of animals, in accordance with one or more embodiments. As shown in FIG. 3, system 300 may include client device 302, client device 304 or other components. Each of client devices 302 and 304 may include any type of mobile terminal, fixed terminal, or other device. Each of these devices may receive content and data via input/output (hereinafter "I/O") paths and may also include processors and/or other components to send and receive commands, requests, and other suitable data using the I/O paths. Control circuitry 200 may comprise any suitable processing circuitry. Each of these devices may also include a user input interface and/or display for use in receiving and displaying data. By way of example, client devices 302 and 304 may include a desktop computer, a server, or other client device. Users may, for instance, utilize one or more client devices 302 and 304 to interact with one another, one or more servers, or other components of computing system 300. It should be noted that, while one or more operations are described herein as being performed by particular components of computing system 300, those operations may, in some embodiments, be performed by other components of computing system 300. As an example, while one or more operations are described herein as being performed by components of client device 302, those operations may, in some embodiments, be performed by components of client device 304. It should be noted that, although some embodiments are described herein with respect to machine learning models, other prediction models (e.g., statistical models or other analytics models) may be used in lieu of or in addition to machine learning models in other embodiments (e.g., a statistical model replacing a machine learning model and a non-statistical model replacing a non-machine-learning model in one or more embodiments).

Each of these devices may also include memory in the form of electronic storage. The electronic storage may include non-transitory storage media that electronically stores information. The electronic storage media of the electronic storages may include one or both of (i) system storage that is provided integrally (e.g., substantially non-removable) with servers or client devices or (ii) removable storage that is removably connectable to the servers or client devices via, for example, a port (e.g., a USB port, a firewire port, etc.) or a drive (e.g., a disk drive, etc.). The electronic storages may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storages may include one or more virtual storage resources (e.g., cloud storage, a virtual private network, and/or other virtual storage resources). The electronic storage may store software algorithms, information determined by the processors, information obtained from servers, information obtained from client devices, or other information that enables the functionality as described herein.

FIG. 3 also includes communication paths 308, 310, and 312. Communication paths 308, 310, and 312 may include a local network (e.g., a Wi-Fi or other wired or wireless local network), the Internet, a mobile phone network, a mobile voice or data network (e.g., a 4G or LTE network), a cable network, a public switched telephone network, wires, or other types of communications network or combinations of communications networks. Communication paths 308, 310, and 312 may separately or together include one or more communications paths, such as a satellite path, a fiber-optic path, a cable path, a path that supports Internet communications (e.g., IPTV), free-space connections (e.g., for broadcast or other wireless signals), or any other suitable wired or wireless communications path or combination of such paths. The computing devices may include additional communication paths linking a plurality of hardware, software, and/or firmware components operating together. For example, the computing devices may be implemented by a cloud of computing platforms operating together as the computing devices.

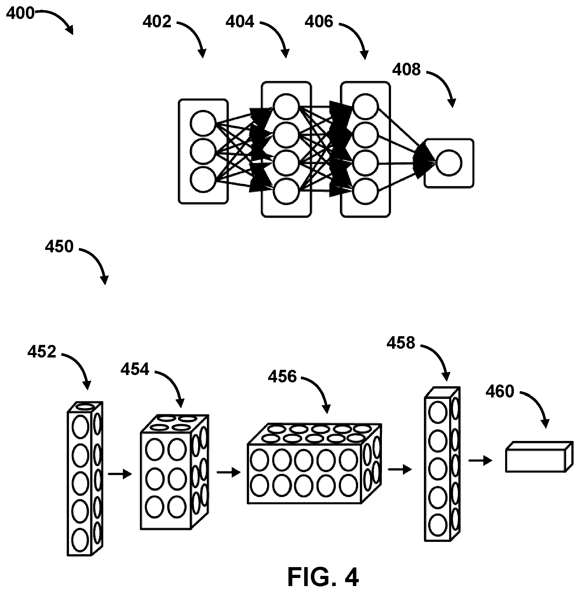

In some embodiments, computing system 300 may use one or more prediction models to predict characteristics based on visual images, ultrasound images, or other information. For example, as shown in FIG. 3, computing system 300 may predict a characteristic of an animal (e.g., a fish identified by a specimen identification) using machine learning model 322. The determination may be output shown as output 318 on client device 304. Computing system 300 may include one or more neural networks (e.g., as discussed in relation to FIG. 4) or other machine learning models. These neural networks or other machine learning models may be located locally (e.g., executed by one or more components of computing system 300 located at or near fish processing) or remotely (e.g., executed by a remote or cloud server that is part of computing system 300).

As an example, with respect to FIG. 3, machine learning model 322 may take inputs 324 and provide outputs 326. The inputs may include multiple data sets such as a training data set and a test data set. The data sets may represent (e.g., ultrasound) images (or image sets) of animals such as fish or other animals. In one use case, outputs 326 may be fed back to machine learning model 322 as input to train machine learning model 322 (e.g., alone or in conjunction with user indications of the accuracy of outputs 326, labels associated with the inputs, or with other reference feedback information). In another use case, machine learning model 322 may update its configurations (e.g., weights, biases, or other parameters) based on its assessment of its prediction (e.g., outputs 326) and reference feedback information (e.g., user indication of accuracy, reference labels, or other information). In another use case, where machine learning model 322 is a neural network, connection weights may be adjusted to reconcile differences between the neural network's prediction and the reference feedback. In a further use case, one or more neurons (or nodes) of the neural network may require that their respective errors are sent backward through the neural network to them to facilitate the update process (e.g., backpropagation of error). Updates to the connection weights may, for example, be reflective of the magnitude of error propagated backward after a forward pass has been completed. In this way, for example, the machine learning model 322 may be trained to generate better predictions.

Machine learning model 322 may be trained to detect the characteristics in animals based on a set of ultrasound images. For example, ultrasound transducers 106a, 106b, or 106c (FIG. 1) may generate the ultrasound image set of a first fish (as an example of an animal). Computing system 300 may determine a genotype biomarker in the first fish. The presence of a particular genotype biomarker is then correlated to one or more phenotype characteristics. For example, machine learning model 322 may have classifications for characteristics. Machine learning model 322 is then trained based on a first data set (e.g., including data of the first fish and others) to classify a specimen as having a given characteristic when particular ultrasound image features are present.

The system may then receive an ultrasound image set of a second fish. Computing system 300 may input one or more of the ultrasound images in the set into machine learning model 322. Computing system 300 may then receive an output from machine learning model 322 indicating that the second fish has the same characteristic (e.g., genotype biomarker) as the first. For example, computing system 300 may input a second data set (e.g., ultrasound image sets of fish for which characteristics are not known) into machine learning model 322. Machine learning model 322 may then classify the image sets of fish based on the images.

FIG. 4 shows a graphical representations of artificial neural network models for characteristic determination based on (visual or) ultrasound images, in accordance with one or more embodiments. Model 400 illustrates an artificial neural network. Model 400 includes input layer 402. Ultrasound image sets may be entered into model 400 at this level. Model 400 also includes one or more hidden layers (e.g., hidden layer 404 and hidden layer 406). Model 400 may be based on a large collection of neural units (or artificial neurons). Model 400 loosely mimics the manner in which a biological brain works (e.g., via large clusters of biological neurons connected by axons). Each neural unit of a model 400 may be connected with many other neural units of model 400. Such connections can be enforcing or inhibitory in their effect on the activation state of connected neural units. In some embodiments, each individual neural unit may have a summation function which combines the values of all of its inputs together. In some embodiments, each connection (or the neural unit itself) may have a threshold function such that the signal must surpass before it propagates to other neural units. Model 400 may be self-learning and trained, rather than explicitly programmed, and can perform significantly better in certain areas of problem solving, as compared to traditional computer programs. During training, output layer 408 may corresponds to a classification of model 400 (e.g., whether or not a given image set corresponds to a characteristic) and an input known to correspond to that classification may be input into input layer 402. In some embodiments, model 400 may include multiple layers (e.g., where a signal path traverses from front layers to back layers). In some embodiments, back propagation techniques may be utilized by model 400 where forward stimulation is used to reset weights on the "front" neural units. In some embodiments, stimulation and inhibition for the model may be more free-flowing, with connections interacting in a more chaotic and complex fashion. Model 400 also includes output layer 408. During testing, output layer 408 may indicate whether or not a given input corresponds to a classification of model 400 (e.g., whether or not a given image set corresponds to a characteristic).

FIG. 4 also illustrates model 450, which is a convolutional neural network. The convolutional neural network is an artificial neural network that features one or more convolutional layers. Convolution layers extract features from an input image. Convolution preserves the relationship between pixels by learning image features using small squares of input data. As shown in model 450, input layer 452 may proceed to convolution blocks 454 and 456 before being output to convolutional output or block 458. In some embodiments, model 450 may itself serve as an input to model 400.

In some embodiments, model 450 may implement an inverted residual structure where the input and output of a residual block (e.g., block 454) are thin bottleneck layers. A residual layer may feed into the next layer and directly into layers that are one or more layers downstream. A bottleneck layer (e.g., block 458) is a layer that contains few neural units compared to the previous layers. Model 450 may use a bottleneck layer to obtain a representation of the input with reduced dimensionality. An example of this is the use of autoencoders with bottleneck layers for nonlinear dimensionality reduction. Additionally, model 450 may remove non-linearities in a narrow layer (e.g., block 458) in order to maintain representational power. In some embodiments, the design of model 450 may also be guided by the metric of computation complexity (e.g., the number of floating point operations). In some embodiments, model 450 may increase the feature map dimension at all units to involve as many locations as possible instead of sharply increasing the feature map dimensions at neural units that perform downsampling. In some embodiments, model 450 may decrease the depth and increase width of residual layers in the downstream direction.

Returning to FIG. 1 and FIG. 2, control circuitry 200 (e.g., including actuator 222 and PLC board 220 shown in FIG. 2) is configured to control sorter 108 to sort the animals into the groups based on the characteristics. In some embodiments, control circuitry 200 is configured to cause sorter 108 to handle, sort, and/or transfer animals (e.g., for vaccination, gender segregation, transfer to sea or breeding area, etc.). In such embodiments, the characteristics may be detected based on the (visual or) ultrasound images in real-time (e.g., as the animals are transported along conveyor 102 or otherwise transferred). That is, following the output of a given characteristic (e.g., a genotype biomarker) for a given animal, sorter 108 may sort (e.g., actuator 222 may cause a mechanical arm 224 to move back and forth between different positions to sort) the animal based on the determined characteristic.

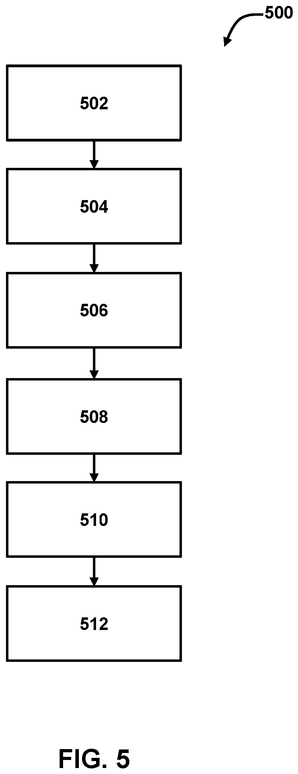

FIG. 5 illustrates a method 500 for sorting animals with a sorting system. Method 500 may be executed by a system such as system 100 (FIG. 1, FIG. 2) and/or other systems. System 100 comprises a conveyor, a camera, an ultrasound transducer, a sorter, control circuitry, and/or other components. The operations of method 500 presented below are intended to be illustrative. In some embodiments, method 500 may be accomplished with one or more additional operations not described, and/or without one or more of the operations discussed. Additionally, the order in which the operations of method 500 are illustrated in FIG. 5 and described below is not intended to be limiting.

In some embodiments, method 500 may be implemented, at least in part, in one or more processing devices such as one or more processing devices described herein (e.g., a digital processor, an analog processor, a digital circuit designed to process information, an analog circuit designed to process information, a state machine, and/or other mechanisms for electronically processing information). The one or more processing devices may include one or more devices executing some or all of the operations of method 500 in response to instructions (e.g., machine readable instructions) stored electronically on an electronic storage medium. The one or more processing devices may include one or more devices configured through hardware, firmware, and/or software to be specifically designed for execution of one or more of the operations of method 500.

At an operation 502, animals are received with a plurality of compartments of the conveyor, and moved along a path. In some embodiments, operation 502 is performed by a conveyor the same as or similar to conveyor 102 (shown in FIG. 1 and described herein).

At an operation 504, a visual image (or set of visual images) of an animal in a compartment on the conveyor is obtained as the animal moves past a camera. In some embodiments, the camera is configured to obtain a red green blue (RGB) image set that includes the visual image. In some embodiments, operation 504 is performed by camera the same as or similar to camera 104 (shown in FIG. 1 and described herein).

At an operation 506, an ultrasound image (or set of ultrasound images) of the animal is obtained with an ultrasound transducer. The ultrasound image of the animal is obtained with the animal in the compartment on the conveyor. The ultrasound transducer is configured to obtain the ultrasound image while the ultrasound transducer moves along a portion of the path with the animal. In some embodiments, the ultrasound transducer is configured to obtain an ultrasound image set of the animal that includes the ultrasound image. In some embodiments, operation 506 is performed by one or more ultrasound transducers the same as or similar to ultrasound transducers 106a, 106b, or 106c (shown in FIG. 1 and described herein).

At an operation 508, a starting point on the animal is determined for the ultrasound transducer, with the control circuitry, based on the visual image. The control circuitry is configured to determine the starting point on the animal by providing the visual image to a machine vision algorithm, which is trained to determine the starting point based on the visual image. In some embodiments, the animal is a fish and the starting point corresponds to a start of an operculum of the fish.

Operation 508 also includes controlling the ultrasound transducer to move along the portion of the path based on the starting point to obtain the ultrasound image. Controlling the ultrasound transducer comprises controlling the ultrasound transducer to move in at least two dimensions. The at least two dimensions comprise a first dimension along the path and a second dimension along a body of the animal. The second dimension is substantially perpendicular to the first dimension and the path. The ultrasound transducer is configured to move in the first dimension and the second dimension substantially simultaneously while obtaining the ultrasonic image, starting from the starting point. A width of the ultrasonic transducer and the movement in the second dimension defines an image area on the body of the animal. The image area includes a target anatomy of the animal. In some embodiments, the sorting system includes a plurality of ultrasound transducers, and operation 508 includes controlling, with the control circuitry, the plurality of ultrasound transducers to obtain ultrasound images of a plurality of animals in a plurality of compartments on the conveyor at the same time. In some embodiments, operation 508 is performed by control circuitry the same as or similar to control circuitry 200 (shown in FIG. 2 and described herein).

At an operation 510, a characteristic of the animal is determined. The characteristic is determined with the control circuitry, based on the ultrasound image. The characteristic is gender of the animal, presence of disease in the animal, size of the animal, early maturation of the animal, mature parr, presence of bacterial kidney disease in the animal, heart and/or skeletal muscle inflammation in the animal, a fat percentage of the animal, and/or other characteristics.

The control circuitry is configured to determine the characteristic of the animal based on the ultrasound image by inputting the ultrasound image to an artificial neural network, which is trained to output the characteristic based on the ultrasound image. The artificial neural network is trained to identify one or more phenotype characteristics of the animal based on the ultrasound image, and determine presence of a biomarker in the animal indicative of the characteristic output by the artificial neural network based on the one or more phenotype characteristics. In some embodiments, the control circuitry is configured to determine the starting point based on the RGB image set, and determine the characteristic based on the ultrasound image set. In some embodiments, the animal is a fish and the visual image is a red green blue (RGB) image, and operation 510 comprises determining, with the control circuitry, based on the RGB image, a short operculum in the fish and/or damage to gills of the fish, diseases resistance, growth performance, current diseases, and/or other characteristics. In some embodiments, operation 510 is performed by control circuitry the same as or similar to control circuitry 200 (shown in FIG. 2 and described herein).

At an operation 512, the sorter is controlled to sort the animal into a group based on the characteristic. In some embodiments, the sorter comprises a mechanical arm. The mechanical arm is controlled, with the control circuitry, to move between multiple positions such that sorting the animal into a group comprises moving the mechanical arm to direct the animal from the conveyor to a same physical location as other animals in a group. In some embodiments, operation 512 is performed by control circuitry the same as or similar to control circuitry 200 (shown in FIG. 2 and described herein) or a sorter the same as or similar to sorter 108 (shown in FIG. 1 and described herein).

In block diagrams such as FIG. 5, illustrated components are depicted as discrete functional blocks, but embodiments are not limited to systems in which the functionality described herein is organized as illustrated. The functionality provided by each of the components may be provided by software or hardware modules that are differently organized than is presently depicted, for example such software or hardware may be intermingled, conjoined, replicated, broken up, distributed (e.g. within a data center or geographically), or otherwise differently organized. The functionality described herein may be provided by one or more processors of one or more computers executing code stored on a tangible, non-transitory, machine readable medium. In some cases, notwithstanding use of the singular term "medium," the instructions may be distributed on different storage devices associated with different computing devices, for instance, with each computing device having a different subset of the instructions, an implementation consistent with usage of the singular term "medium" herein. In some cases, third party content delivery networks may host some or all of the information conveyed over networks, in which case, to the extent information (e.g., content) is said to be supplied or otherwise provided, the information may be provided by sending instructions to retrieve that information from a content delivery network.

It is contemplated that the steps or descriptions of FIG. 5 may be used with any other embodiment of this disclosure. In addition, the steps and descriptions described in relation to FIG. 5 may be performed in alternative orders or in parallel to further the purposes of this disclosure. For example, each of these steps may be performed in any order or in parallel or substantially simultaneously to reduce lag or increase the speed of the system or method. Furthermore, it should be noted that any of the devices or equipment discussed in relation to FIGS. 1-4 could be used to perform one or more of the steps in FIG. 5.

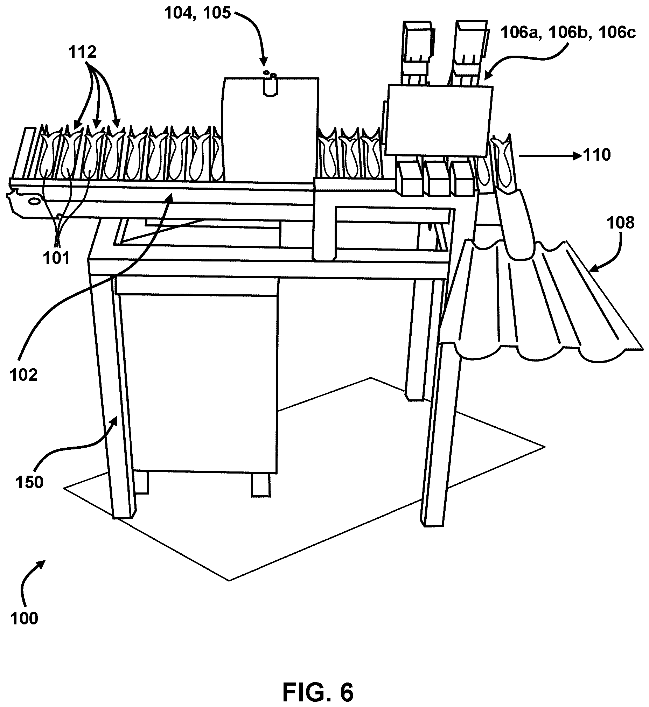

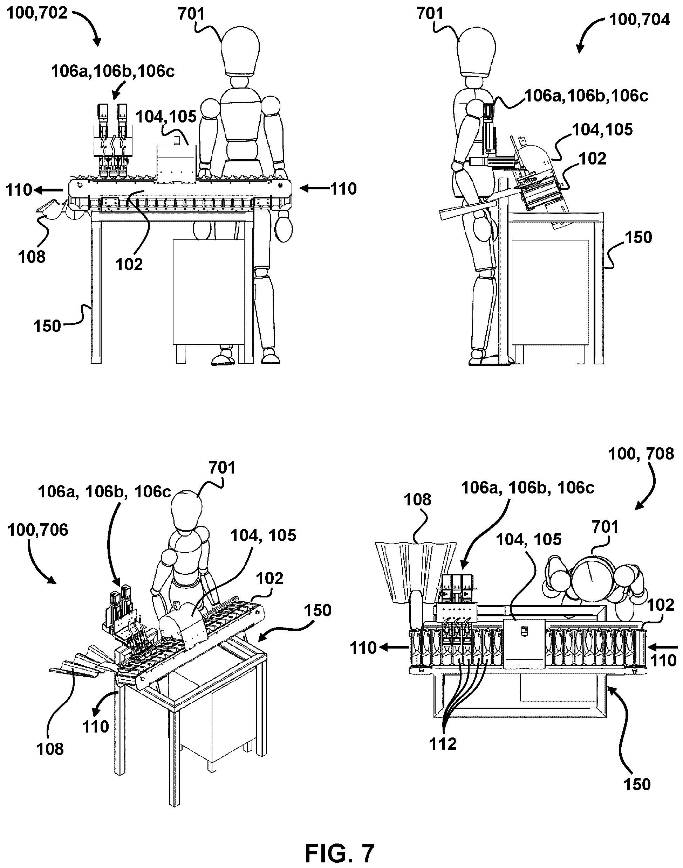

To the extent that it aids understanding of the concepts described above, FIG. 6 illustrates a view of system 100 from a different angle than the view shown in FIG. 1. FIG. 7 illustrates different views 702, 704, 706, and 708 of system 100 with a hypothetical operator 701 shown at system 100 in each view. View 702 is a front view. View 704 is an end view. View 706 is a perspective view from an angle above system 100. View 708 is a top view. In FIG. 6 and FIG. 7, like reference numerals illustrate like components (which are described above).

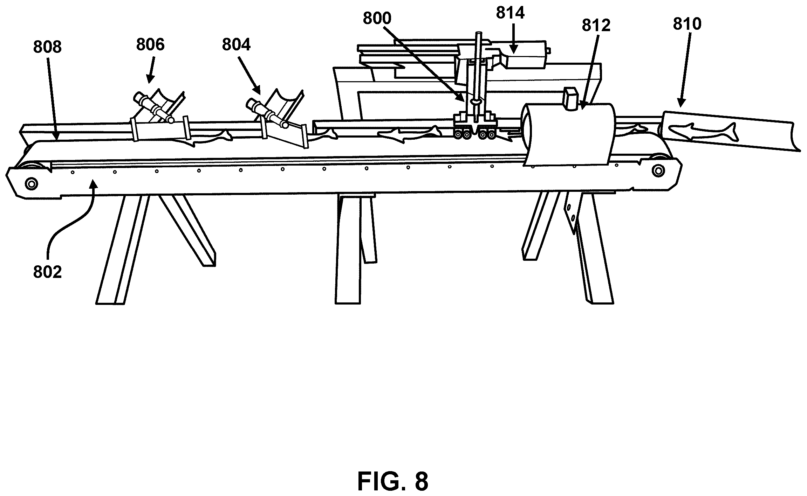

Other embodiments of the present system are contemplated. FIG. 8-10 illustrate examples of other possible embodiments of the present system. System components shown in FIG. 8-10 are similar to and/or the same as those described above with respect to FIG. 1-7. As such, the descriptions of components described above also apply here.

For example, FIG. 8 illustrates a single ultrasonic transducer 800 version of the sorting system where animals travel down a conveyor 802 and are sorted via doors 804, 806, or by simply falling off an end 808 of conveyor 802. FIG. 8 also illustrates a feeder 810, a camera 812, and an actuator 814.

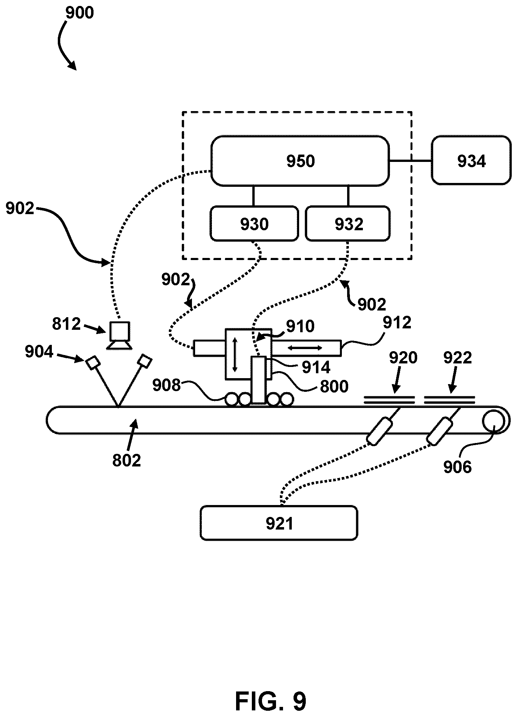

FIG. 9 illustrates a schematic view of the version of the system shown in FIG. 8. FIG. 9 illustrates additional components of the system including control circuitry 900. For example, FIG. 9 illustrates various wired or wireless electronic communication paths 902 formed between different components of the system. FIG. 9 illustrates lighting 904 that may be coupled to camera 812, for example. FIG. 9 illustrates a gear motor 906 configured to drive conveyor 802. FIG. 9 illustrates compression rollers 908 coupled to ultrasound transducer 800 configured to place animals that are being ultrasonically imaged under pressure (e.g., to prevent unintentional movement during imaging), actuators 910 and 912 configured to move the ultrasound transducer (as described above), a compensation mechanism 914, sorting door actuators 920 and 922, computing system 950, a programmable logic controller (PLC) input output (I/O) board 921, a motion controller 930, an ultrasound transducer control board 932, a human machine interface (HMI) 934, and/or other components that are part of or configured to communicate with a computing system 950, or other components.

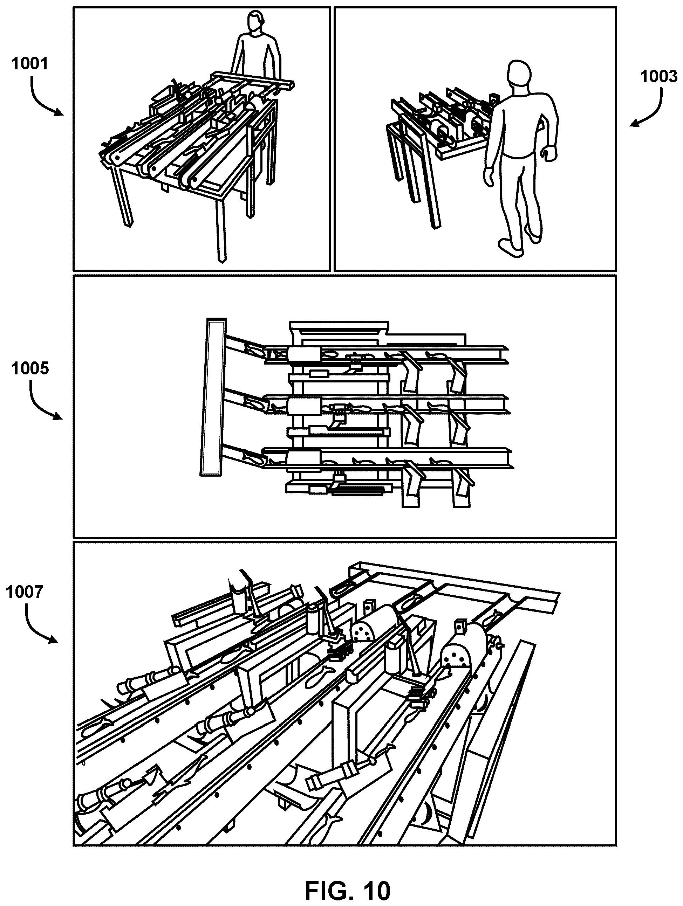

FIG. 10 illustrates several views 1001 - 1007 of a three (in this example) conveyor embodiment of the present system. Each conveyor in the embodiment shown in FIG. 10 may be similar to the conveyor shown in FIG. 8 and 9, for example (e.g., with a conveyor, doors, a feeder, a camera, control circuitry, etc.).

Although the present invention has been described in detail for the purpose of illustration based on what is currently considered to be the most practical and preferred embodiments, it is to be understood that such detail is solely for that purpose and that the invention is not limited to the disclosed embodiments, but on the contrary, is intended to cover modifications and equivalent arrangements that are within the scope of the appended claims. For example, it is to be understood that the present invention contemplates that, to the extent possible, one or more features of any embodiment can be combined with one or more features of any other embodiment.

The present techniques will be better understood with reference to the following enumerated embodiments:
1. A system for sorting animals, comprising: an ultrasound transducer configured to obtain an ultrasound image of an animal located on a path, the ultrasound transducer configured to obtain the ultrasound image while the animal moves along a portion of the path; a sorter configured to sort the animal into a group; and control circuitry configured to: determine, based on the ultrasound image, a characteristic of the animal; and control the sorter to sort the animal into the group based on the characteristic.
2. The system of embodiment 1, further comprising: a conveyor comprising a plurality of compartments configured to receive animals and move the animals along the path; and
   a camera configured to obtain a visual image of the animal in a compartment on the conveyor as the animal moves past the camera; wherein: the ultrasound transducer is configured to obtain the ultrasound image of the animal in the compartment on the conveyor, the ultrasound transducer configured to obtain the ultrasound image while the ultrasound transducer moves along a portion of the path with the animal; and the control circuitry is configured to: determine, based on the visual image, a starting point on the animal for the ultrasound transducer, and control the ultrasound transducer to move along the portion of the path based on the starting point to obtain the ultrasound image.
3. The system of any of the previous embodiments, wherein the control circuitry is configured to determine the characteristic of the animal based on the ultrasound image by inputting the ultrasound image to an artificial neural network, which is trained to output the characteristic based on the ultrasound image.
4. The system of any of the previous embodiments, wherein the artificial neural network is trained to identify one or more phenotype characteristics of the animal based on the ultrasound image, and determine presence of a biomarker in the animal indicative of the characteristic output by the artificial neural network based on the one or more phenotype characteristics.
5. The system of any of the previous embodiments, wherein the characteristic is gender of the animal, presence of disease in the animal, size of the animal, early maturation of the animal, mature parr, presence of bacterial kidney disease in the animal, heart and/or skeletal muscle inflammation in the animal, or a fat percentage of the animal.
6. The system of any of the previous embodiments, wherein the control circuitry is configured to determine a starting point on the animal for the ultrasound image by providing a visual image of the animal to a machine vision algorithm, which is trained to determine the starting point based on the visual image.
7. The system of any of the previous embodiments, wherein the ultrasound transducer is configured to move in at least two dimensions, the at least two dimensions comprising: a first dimension along the path; and a second dimension along a body of the animal, the second dimension substantially perpendicular to the first dimension and the path; wherein the ultrasound transducer is configured to move in the first dimension and the second dimension substantially simultaneously while obtaining the ultrasonic image, starting from a starting point; and wherein a width of the ultrasonic transducer and the movement in the second dimension defines an image area on the body of the animal, the image area including target anatomy of the animal.
8. The system of any of the previous embodiments, further comprising a plurality ultrasound transducers, each controlled by the control circuitry to obtain ultrasound images of a plurality of animals in a plurality of compartments on a conveyor at the same time.
9. The system of any of the previous embodiments, wherein the sorter comprises a mechanical arm controlled by the control circuitry to move between multiple positions such that sorting the animal into a group comprises moving the mechanical arm to direct the animal from the conveyor to a same physical location as other animals in the group.
10. The system of any of the previous embodiments, wherein the animal is a fish and a starting point for the ultrasound image corresponds to a start of an operculum of the fish.
11. The system of any of the previous embodiments, the system further comprising a camera, wherein the camera is configured to obtain a red green blue (RGB) image set that includes a visual image; the ultrasound transducer is configured to obtain an ultrasound image set of the animal that includes the ultrasound image; and the control circuitry is configured to: determine a starting point for the ultrasound transducer based on the RGB image set, and determine the characteristic based on the ultrasound image set.
12. The system of any of the previous embodiments, wherein the control circuitry is further configured for determining characteristics based on RGB images and/or other information. For example, in some embodiments, the control circuitry is further configured to determine, based on the RGB image, a short operculum in the fish and/or damage to gills of the fish, diseases resistance, growth performance, current diseases of the fish, a smoltification status, and/or other characteristics (e.g., see other examples of characteristics described herein).
13. A method for sorting animals with a sorting system, the sorting system including an ultrasound transducer, a sorter, and control circuitry, the method comprising: obtaining, with the ultrasound transducer, an ultrasound image of an animal located on a path, the ultrasound transducer configured to obtain the ultrasound image while the animal moves along a portion of the path; determining, with the control circuitry, based on the ultrasound image, a characteristic of the animal; and controlling, with the control circuitry, the sorter to sort the animal into the group based on the characteristic.
14. The method of embodiment 13, the sorting system further including a conveyor and a camera, the method further comprising: receiving animals with a plurality of compartments of the conveyor, and moving the animals along the path; obtaining, with the camera, a visual image of an animal in a compartment on the conveyor as the animal moves past the camera; obtaining, with the ultrasound transducer, the ultrasound image of the animal in the compartment on the conveyor, the ultrasound transducer configured to obtain the ultrasound image while the ultrasound transducer moves along the portion of the path with the animal; and determining, with the control circuitry, based on the visual image, a starting point on the animal for the ultrasound transducer, and controlling the ultrasound transducer to move along the portion of the path based on the starting point to obtain the ultrasound image.
15. The method of any of the previous embodiments, wherein the control circuitry is configured to determine the characteristic of the animal based on the ultrasound image by inputting the ultrasound image to an artificial neural network, which is trained to output the characteristic based on the ultrasound image.
16. The method of any of the previous embodiments, wherein the artificial neural network is trained to identify one or more phenotype characteristics of the animal based on the ultrasound image, and determine presence of a biomarker in the animal indicative of the characteristic output by the artificial neural network based on the one or more phenotype characteristics.
17. The method of any of the previous embodiments, wherein the characteristic is gender of the animal, presence of disease in the animal, size of the animal, early maturation of the animal, mature parr, presence of bacterial kidney disease in the animal, heart and/or skeletal muscle inflammation in the animal, a smoltification status, or a fat percentage of the animal.
18. The method of any of the previous embodiments, wherein the control circuitry is configured to determine a starting point on the animal for the ultrasound image by providing a visual image of the animal to a machine vision algorithm, which is trained to determine the starting point based on the visual image.
19. The method of any of the previous embodiments, further comprising moving the ultrasound transducer in at least two dimensions, the at least two dimensions comprising: a first dimension along the path; and a second dimension along a body of the animal, the second dimension substantially perpendicular to the first dimension and the path; wherein the ultrasound transducer is configured to move in the first dimension and the second dimension substantially simultaneously while obtaining the ultrasonic image, starting from the starting point; and wherein a width of the ultrasonic transducer and the movement in the second dimension defines an image area on the body of the animal, the image area including target anatomy of the animal.
20. The method of any of the previous embodiments, wherein the sorting system includes a plurality of ultrasound transducers, and wherein the method further comprises controlling, with the control circuitry, the plurality of ultrasound transducers to obtain ultrasound images of a plurality of animals in a plurality of compartments on a conveyor at the same time.
21. The method of any of the previous embodiments, wherein the sorter comprises a mechanical arm, and wherein the method further comprises controlling, with the control circuitry, the mechanical arm to move between multiple positions such that sorting the animal into a group comprises moving the mechanical arm to direct the animal from the conveyor to a same physical location as other animals in the group.
22. The method of any of the previous embodiments, wherein the animal is a fish and a starting point for the ultrasound image corresponds to a start of an operculum of the fish.
23. The method of any of the previous embodiments, the system further comprising a camera, wherein the camera is configured to obtain a red green blue (RGB) image set that includes a visual image; the ultrasound transducer is configured to obtain an ultrasound image set of the animal that includes the ultrasound image; and the control circuitry is configured to: determine a starting point for the ultrasound transducer based on the RGB image set, and determine the characteristic based on the ultrasound image set.
24. The method of any of the previous embodiments, wherein the animal is a fish and the visual image is a red green blue (RGB) image, and wherein the method further comprises determining, with the control circuitry, based on the RGB image, a short operculum in the fish and/or damage to gills of the fish, diseases resistance, growth performance, and/or current diseases of the fish.
25. A tangible, non-transitory, machine-readable medium storing instructions that, when executed by a data processing apparatus of the control circuitry, cause the control circuitry to perform one or more operations of any of embodiments 1-24.
Various examples are set out in the following numbered paragraphs (NPs):
NP1. A system for sorting animals, comprising:
   an ultrasound transducer configured to obtain an ultrasound image of an animal located on a path, the ultrasound transducer configured to obtain the ultrasound image while the animal moves along a portion of the path;
   a sorter configured to sort the animal into a group; and
   control circuitry configured to:
      determine, based on the ultrasound image, a characteristic of the animal; and
      control the sorter to sort the animal into the group based on the characteristic.
NP2. The system of NP1, further comprising:
   a conveyor comprising a plurality of compartments configured to receive animals and move the animals along the path; and
   a camera configured to obtain a visual image of the animal in a compartment on the conveyor as the animal moves past the camera;
   wherein:
      the ultrasound transducer is configured to obtain the ultrasound image of the animal in the compartment on the conveyor, the ultrasound transducer configured to obtain the ultrasound image while the ultrasound transducer moves along a portion of the path with the animal; and
      the control circuitry is configured to:
         determine, based on the visual image, a starting point on the animal for the ultrasound transducer, and control the ultrasound transducer to move along the portion of the path based on the starting point to obtain the ultrasound image.
NP3. The system of NP1, wherein the control circuitry is configured to determine the characteristic of the animal based on the ultrasound image by inputting the ultrasound image to an artificial neural network, which is trained to output the characteristic based on the ultrasound image.
NP4. The system of NP3, wherein the artificial neural network is trained to identify one or more phenotype characteristics of the animal based on the ultrasound image, and determine presence of a biomarker in the animal indicative of the characteristic output by the artificial neural network based on the one or more phenotype characteristics.
NP5. The system of NP1, wherein the characteristic is gender of the animal, presence of disease in the animal, size of the animal, early maturation of the animal, mature parr, presence of bacterial kidney disease in the animal, heart and/or skeletal muscle inflammation in the animal, or a fat percentage of the animal.
NP6. The system of NP1, wherein the control circuitry is configured to determine a starting point on the animal for the ultrasound image by providing a visual image of the animal to a machine vision algorithm, which is trained to determine the starting point based on the visual image.
NP7. The system of NP1, wherein the ultrasound transducer is configured to move in at least two dimensions, the at least two dimensions comprising:
   a first dimension along the path; and
   a second dimension along a body of the animal, the second dimension substantially perpendicular to the first dimension and the path;
   wherein the ultrasound transducer is configured to move in the first dimension and the second dimension substantially simultaneously while obtaining the ultrasonic image, starting from a starting point; and
   wherein a width of the ultrasonic transducer and the movement in the second dimension defines an image area on the body of the animal, the image area including target anatomy of the animal.
NP8. The system of NP1, further comprising a plurality ultrasound transducers, each controlled by the control circuitry to obtain ultrasound images of a plurality of animals in a plurality of compartments on a conveyor at the same time.
NP9. The system of NP1, wherein the sorter comprises a mechanical arm controlled by the control circuitry to move between multiple positions such that sorting the animal into a group comprises moving the mechanical arm to direct the animal from the conveyor to a same physical location as other animals in the group.
NP10. The system of NP1, wherein the animal is a fish and a starting point for the ultrasound image corresponds to a start of an operculum of the fish.
NP11. The system of NP1, the system further comprising a camera, wherein the camera is configured to obtain a red green blue (RGB) image set that includes a visual image;
   the ultrasound transducer is configured to obtain an ultrasound image set of the animal that includes the ultrasound image; and
   the control circuitry is configured to:
      determine a starting point for the ultrasound transducer based on the RGB image set, and
      determine the characteristic based on the ultrasound image set.
NP12. The system of NP11, wherein the animal is a fish and the visual image is a red green blue (RGB) image, and wherein the control circuitry is further configured to determine, based on the RGB image, a short operculum in the fish and/or damage to gills of the fish, diseases resistance, growth performance, and/or current diseases of the fish.
NP13. A method for sorting animals with a sorting system, the sorting system including an ultrasound transducer, a sorter, and control circuitry, the method comprising:
   obtaining, with the ultrasound transducer, an ultrasound image of an animal located on a path, the ultrasound transducer configured to obtain the ultrasound image while the animal moves along a portion of the path;
   determining, with the control circuitry, based on the ultrasound image, a characteristic of the animal; and
   controlling, with the control circuitry, the sorter to sort the animal into the group based on the characteristic.
NP14. The method of NP13, the sorting system further including a conveyor and a camera, the method further comprising:
   receiving animals with a plurality of compartments of the conveyor, and moving the animals along the path;
   obtaining, with the camera, a visual image of an animal in a compartment on the conveyor as the animal moves past the camera;
   obtaining, with the ultrasound transducer, the ultrasound image of the animal in the compartment on the conveyor, the ultrasound transducer configured to obtain the ultrasound image while the ultrasound transducer moves along the portion of the path with the animal; and
   determining, with the control circuitry, based on the visual image, a starting point on the animal for the ultrasound transducer, and controlling the ultrasound transducer to move along the portion of the path based on the starting point to obtain the ultrasound image.
NP15. The method of NP13, wherein the control circuitry is configured to determine the characteristic of the animal based on the ultrasound image by inputting the ultrasound image to an artificial neural network, which is trained to output the characteristic based on the ultrasound image.
NP16. The method of NP15, wherein the artificial neural network is trained to identify one or more phenotype characteristics of the animal based on the ultrasound image, and determine presence of a biomarker in the animal indicative of the characteristic output by the artificial neural network based on the one or more phenotype characteristics.
NP17. The method of NP13, wherein the characteristic is gender of the animal, presence of disease in the animal, size of the animal, early maturation of the animal, mature parr, presence of bacterial kidney disease in the animal, heart and/or skeletal muscle inflammation in the animal, or a fat percentage of the animal.
NP18. The method of NP13, wherein the control circuitry is configured to determine a starting point on the animal for the ultrasound image by providing a visual image of the animal to a machine vision algorithm, which is trained to determine the starting point based on the visual image.
NP19. The method of NP13, further comprising moving the ultrasound transducer in at least two dimensions, the at least two dimensions comprising:
   a first dimension along the path; and
   a second dimension along a body of the animal, the second dimension substantially perpendicular to the first dimension and the path;
   wherein the ultrasound transducer is configured to move in the first dimension and the second dimension substantially simultaneously while obtaining the ultrasonic image, starting from the starting point; and
   wherein a width of the ultrasonic transducer and the movement in the second dimension defines an image area on the body of the animal, the image area including target anatomy of the animal.
NP20. The method of NP13, wherein the sorting system includes a plurality of ultrasound transducers, and wherein the method further comprises controlling, with the control circuitry, the plurality of ultrasound transducers to obtain ultrasound images of a plurality of animals in a plurality of compartments on a conveyor at the same time.
NP21. The method of NP13, wherein the sorter comprises a mechanical arm, and wherein the method further comprises controlling, with the control circuitry, the mechanical arm to move between multiple positions such that sorting the animal into a group comprises moving the mechanical arm to direct the animal from the conveyor to a same physical location as other animals in the group.
NP22. The method of NP13, wherein the animal is a fish and a starting point for the ultrasound image corresponds to a start of an operculum of the fish.
NP23. The method of NP13, the system further comprising a camera, wherein the camera is configured to obtain a red green blue (RGB) image set that includes a visual image;
   the ultrasound transducer is configured to obtain an ultrasound image set of the animal that includes the ultrasound image; and
   the control circuitry is configured to:
      determine a starting point for the ultrasound transducer based on the RGB image set, and
      determine the characteristic based on the ultrasound image set.
NP24. The method of NP23, wherein the animal is a fish and the visual image is a red green blue (RGB) image, and wherein the method further comprises determining, with the control circuitry, based on the RGB image, a short operculum in the fish and/or damage to gills of the fish, diseases resistance, growth performance, and/or current diseases of the fish.

## Claims

1. A system for sorting animals, comprising:
an ultrasound transducer configured to obtain an ultrasound image of an animal located on a path, the ultrasound transducer configured to obtain the ultrasound image while the animal moves along a portion of the path;
a sorter configured to sort the animal into a group; and
control circuitry configured to:
determine, based on the ultrasound image, a characteristic of the animal; and
control the sorter to sort the animal into the group based on the characteristic.

2. The system of claim 1, further comprising:
a conveyor comprising a plurality of compartments configured to receive animals and move the animals along the path; and
a camera configured to obtain a visual image of the animal in a compartment on the conveyor as the animal moves past the camera;
wherein:
the ultrasound transducer is configured to obtain the ultrasound image of the animal in the compartment on the conveyor, the ultrasound transducer configured to obtain the ultrasound image while the ultrasound transducer moves along a portion of the path with the animal; and
the control circuitry is configured to:
determine, based on the visual image, a starting point on the animal for the ultrasound transducer, and control the ultrasound transducer to move along the portion of the path based on the starting point to obtain the ultrasound image.

3. The system of claim 1, wherein the ultrasound transducer is configured to move in at least two dimensions, the at least two dimensions comprising:
a first dimension along the path; and
a second dimension along a body of the animal, the second dimension substantially perpendicular to the first dimension and the path;
wherein the ultrasound transducer is configured to move in the first dimension and the second dimension substantially simultaneously while obtaining the ultrasonic image, starting from a starting point; and
wherein a width of the ultrasonic transducer and the movement in the second dimension defines an image area on the body of the animal, the image area including target anatomy of the animal.

4. The system of claim 1, further comprising a plurality ultrasound transducers, each controlled by the control circuitry to obtain ultrasound images of a plurality of animals in a plurality of compartments on a conveyor at the same time.

5. The system of claim 1, wherein the sorter comprises a mechanical arm controlled by the control circuitry to move between multiple positions such that sorting the animal into a group comprises moving the mechanical arm to direct the animal from the conveyor to a same physical location as other animals in the group.

6. The system of claim 1, the system further comprising a camera, wherein the camera is configured to obtain a red green blue (RGB) image set that includes a visual image;
the ultrasound transducer is configured to obtain an ultrasound image set of the animal that includes the ultrasound image; and
the control circuitry is configured to:
determine a starting point for the ultrasound transducer based on the RGB image set, and
determine the characteristic based on the ultrasound image set;
wherein, optionally: the animal is a fish and the visual image is a red green blue (RGB) image, and the control circuitry is further configured to determine, based on the RGB image, a short operculum in the fish and/or damage to gills of the fish, diseases resistance, growth performance, and/or current diseases of the fish.

7. A method for sorting animals with a sorting system, the sorting system including an ultrasound transducer, a sorter, and control circuitry, the method comprising:
obtaining, with the ultrasound transducer, an ultrasound image of an animal located on a path, the ultrasound transducer configured to obtain the ultrasound image while the animal moves along a portion of the path;
determining, with the control circuitry, based on the ultrasound image, a characteristic of the animal; and
controlling, with the control circuitry, the sorter to sort the animal into the group based on the characteristic.

8. The method of claim 7, the sorting system further including a conveyor and a camera, the method further comprising:
receiving animals with a plurality of compartments of the conveyor, and moving the animals along the path;
obtaining, with the camera, a visual image of an animal in a compartment on the conveyor as the animal moves past the camera;
obtaining, with the ultrasound transducer, the ultrasound image of the animal in the compartment on the conveyor, the ultrasound transducer configured to obtain the ultrasound image while the ultrasound transducer moves along the portion of the path with the animal; and
determining, with the control circuitry, based on the visual image, a starting point on the animal for the ultrasound transducer, and controlling the ultrasound transducer to move along the portion of the path based on the starting point to obtain the ultrasound image.

9. The system of claim 1 or the method of claim 7, wherein the control circuitry is configured to determine the characteristic of the animal based on the ultrasound image by inputting the ultrasound image to an artificial neural network, which is trained to output the characteristic based on the ultrasound image;
wherein, optionally, the artificial neural network is trained to identify one or more phenotype characteristics of the animal based on the ultrasound image, and determine presence of a biomarker in the animal indicative of the characteristic output by the artificial neural network based on the one or more phenotype characteristics.

10. The system of claim 1 or the method of claim 7, wherein:
(a) the characteristic is gender of the animal, presence of disease in the animal, size of the animal, early maturation of the animal, mature parr, presence of bacterial kidney disease in the animal, heart and/or skeletal muscle inflammation in the animal, or a fat percentage of the animal; or
(b) the control circuitry is configured to determine a starting point on the animal for the ultrasound image by providing a visual image of the animal to a machine vision algorithm, which is trained to determine the starting point based on the visual image.

11. The method of claim 7, further comprising moving the ultrasound transducer in at least two dimensions, the at least two dimensions comprising:
a first dimension along the path; and
a second dimension along a body of the animal, the second dimension substantially perpendicular to the first dimension and the path;
wherein the ultrasound transducer is configured to move in the first dimension and the second dimension substantially simultaneously while obtaining the ultrasonic image, starting from the starting point; and
wherein a width of the ultrasonic transducer and the movement in the second dimension defines an image area on the body of the animal, the image area including target anatomy of the animal.

12. The method of claim 7, wherein the sorting system includes a plurality of ultrasound transducers, and wherein the method further comprises controlling, with the control circuitry, the plurality of ultrasound transducers to obtain ultrasound images of a plurality of animals in a plurality of compartments on a conveyor at the same time.

13. The method of claim 7, wherein the sorter comprises a mechanical arm, and wherein the method further comprises controlling, with the control circuitry, the mechanical arm to move between multiple positions such that sorting the animal into a group comprises moving the mechanical arm to direct the animal from the conveyor to a same physical location as other animals in the group.

14. The system of claim 1 or the method of claim 7, wherein the animal is a fish and a starting point for the ultrasound image corresponds to a start of an operculum of the fish.

15. The method of claim 7, the system further comprising a camera, wherein the camera is configured to obtain a red green blue (RGB) image set that includes a visual image;
the ultrasound transducer is configured to obtain an ultrasound image set of the animal that includes the ultrasound image; and
the control circuitry is configured to:
determine a starting point for the ultrasound transducer based on the RGB image set, and
determine the characteristic based on the ultrasound image set.
wherein, optionally: the animal is a fish and the visual image is a red green blue (RGB) image, and the method further comprises determining, with the control circuitry, based on the RGB image, a short operculum in the fish and/or damage to gills of the fish, diseases resistance, growth performance, and/or current diseases of the fish.
